# EUROPÄISCHE PATENTANMELDUNG

(11) **EP 4 357 200 A1**
(43) Veröffentlichungstag der Anmeldung: **24.04.2024**
(21) Anmeldenummer: 23204016.2
(22) Anmeldetag: 17.10.2023
(51) Int. Cl.: B60R 9/10, B60R 25/10

(54) **FAHRRADTRÄGER MIT ALARMANLAGE**

(30) Priorität: 21.10.2022 IT 202200021741
(71) Anmelder: Rigotti, Walter, 38023 Cles Trentino (IT); Mattedi, Enrico, 38012 Predaia Trentino (IT); Visintainer, Valter, 38023 Cles Trentino (IT); Magnani Nicola, 38012 Predaia Trentino (IT); Rigotti, Cristian, 38023 Cles Trentino (IT)
(72) Erfinder: Rigotti, Walter, 38023 Cles Trentino (IT); Mattedi, Enrico, 38012 Predaia Trentino (IT); Visintainer, Valter, 38023 Cles Trentino (IT); Magnani Nicola, 38012 Predaia Trentino (IT); Rigotti, Cristian, 38023 Cles Trentino (IT)
(74) Vertreter: Ausserer, Anton

(57) **Zusammenfassung**

Die Erfindung betrifft einen Fahrradträger mit einer Alarmanlage (100) für ein Fahrzeug, umfassend einen Rahmen (110), wobei der Rahmen einen an einem Fahrzeug anbringbaren Sockel (113) und/oder eine Anlage zur Befestigung an einem Fahrzeug (115), beispielsweise für ein Autodach und/oder das Heck eines Wohnmobils oder dergleichen, aufweist und der mindestens ein Gehäuse (111) zur Aufnahme eines Fahrradrades aufweist.

Erfindungsgemäß nimmt der Rahmen (110) in seinem Inneren eine Steuereinheit auf, die mit mindestens einem in dem Gehäuse zur Aufnahme eines Fahrradrades angeordneten Sensor (121) und mit mindestens einem optischen/akustischen Signalsystem und/oder Datenübertragungssystem verbunden ist, und dass die Steuereinheit innerhalb des Rahmens angeordnet ist, der nur durch eine Abdeckung (112) zugänglich ist, und das Fahrradrad mittels eines Befestigungselementes (120) in dem Gehäuse zur Aufnahme eines Fahrradrades (111) befestigt ist.

## Beschreibung

Die vorliegende Erfindung bezieht sich auf Fahrradträger mit Alarmanlage für Fahrzeuge. Fahrzeugmontierte Alarmanlagen sind z.B. an Autos, Wohnmobilen, Anhängern und dergleichen bekannt.

Aus der DE 10 2018 203 946 ist ein OBD-Verfahren (On Board Diagnosis) zur Erkennung von unbefugten Zugriffen auf ein Fahrzeug oder dessen Peripheriegeräte bekannt. Dieses System ermöglicht es, den Schutzbereich eines bestehenden Diebstahlschutzsystems, insbesondere für Fahrradträger und dergleichen, zu erweitern. Zur Erkennung von unbefugtem Zutritt können Türsensoren und/oder z.B. Ultraschallsensoren und/oder optische Sensoren, die mit der Alarmanlage des Fahrzeugs verbunden sind, sowie ein anti Jamming vorgesehen werden.

Dieses System muss in die Maschine integriert werden und ist nicht aktiv, wenn die Maschine in Betrieb ist.

Aufgabe der vorliegenden Erfindung ist es, ein Alarmsystem für Fahrradträger zu realisieren, das die Überwachung und den Schutz von Fahrrädern unabhängig von anderen Systemen ermöglicht,
Diese Aufgabe wird durch ein System gemäß dem kennzeichnenden Teil des Anspruchs 1 gelöst.

Der erfindungsgemäße Fahrradträger mit Alarmanlage umfasst einen Rahmen mit mindestens einem Gehäuse zur Aufnahme eines Fahrrads und einen Sockel, der an einem Fahrzeug und/oder einem Befestigungssystem, beispielsweise einem Autodach und/oder dem Heck eines Wohnmobils oder dergleichen, befestigbar ist.

Erfindungsgemäß weist der Rahmen in seinem Inneren eine Steuereinheit auf, die mindestens einen Kontaktsensor steuert, der an einem vom Fahrradträger getragenen Fahrradrahmen befestigt werden kann, und einen Vibrations-/Drucksensor, der in dem Gehäuse angeordnet ist, das die Räder eines Fahrrads aufnimmt. Ferner ist mindestens eine Einrichtung zur Abgabe akustischer und/oder optischer Signale am Rahmen angeordnet. Die Steuereinheit verfügt über mindestens ein Kommunikationssystem zur Übermittlung eines Signals/Alarms an ein externes Gerät, beispielsweise ein Mobiltelefon. Vorteilhafterweise kann die Steuereinheit auch teilweise über das externe Gerät gesteuert und/oder scharfgeschaltet werden.

Die Steuereinheit ist durch eine Öffnung im geschlossenen Rahmen mittels eines Deckels zugänglich. Der Deckel ist vorteilhafterweise mit einem Sabotageschutzsystem ausgestattet. Sobald der Deckel geöffnet und/oder manipuliert wird, löst das System einen Alarm/Signal aus. Die Steuereinheit kann direkt vom Fahrzeug mit Strom versorgt werden und/oder eine Batterie enthalten, um ihren Betrieb zu gewährleisten. Vorteilhafterweise ist das System so konfiguriert, dass es sich selbst auflädt, während das Fahrzeug in Bewegung ist. Dies kann z. B. durch Sensoren festgestellt werden, die die Geschwindigkeit und/oder den Motorbetrieb des Fahrzeugs erfassen.

Unter den beiden Rädern des Fahrrads sind im Sitz des Rahmens, der die Fahrradräder aufnimmt, ein oder mehrere Vibrationssensoren angebracht, die aktiviert werden, wenn das Fahrrad auch nur leicht bewegt wird. Dieser Sensor kann selektiv mit der Bewegung des Fahrzeugs deaktiviert werden, um Fehlalarme zu vermeiden.

Die Sensoren werden vorzugsweise über ein kabelgebundenes System angeschlossen, das innerhalb der Rohre/Mulden verläuft, die den Fahrradträgerrahmen bilden.

Das Fahrradträgersystem verfügt außerdem über eine interne Selbstdiagnosevorrichtung, die die Funktion aller angeschlossenen Sensoren überprüft. Für den Fall, dass einer oder mehrere der Sensoren fehlerhaft, beschädigt oder in der Kommunikation mit der Steuereinheit unterbrochen sind, sendet das System ein optisches und/oder akustisches Signal und aus mindestens einem Datensignal beispielsweise eine Textnachricht an einen vorbestimmten Benutzer, beispielsweise den Eigentümer des Fahrzeugs, um vor dem Fehler, Defekt und/oder der Manipulation zu warnen. Weitere Merkmale und Einzelheiten der Erfindung ergeben sich aus den Ansprüchen und der nachfolgenden Beschreibung einer bevorzugten, nicht einschränkenden Ausführungsform, die in den beigefügten Zeichnungen dargestellt ist, wobei diese zeigen:
Figur 1 eine perspektivische Ansicht eines Fahrradträgers mit einer erfindungsgemäßen Alarmanlage und

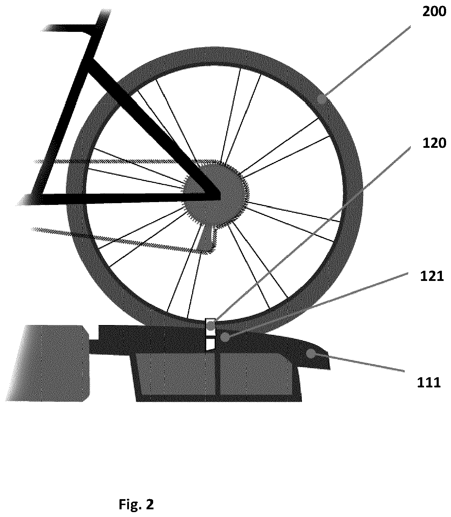

Figur 2 eine Vergrößerung der Hinterradbefestigung im erfindungsgemäßen Fahrradträger.

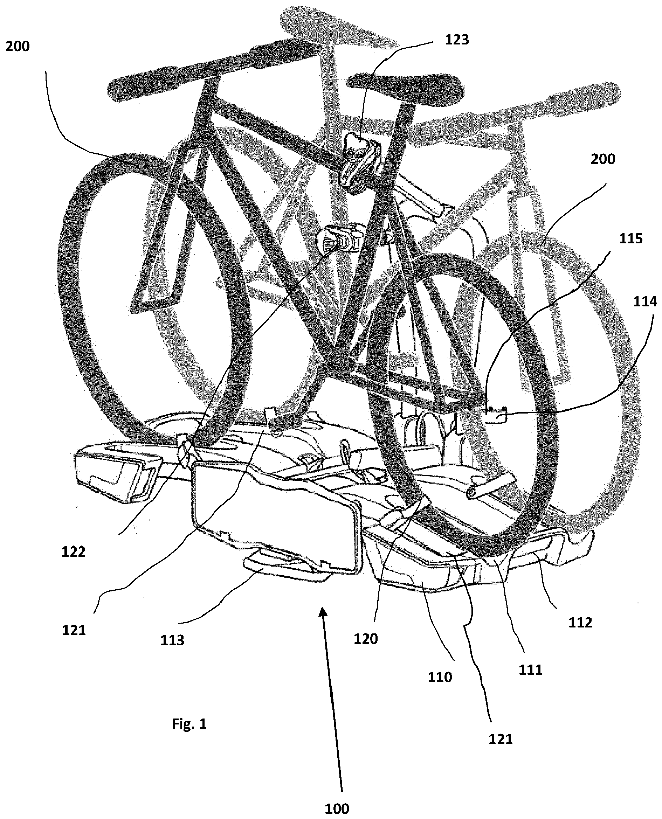

Figur 1 zeigt einen Fahrradträger mit Alarmanlage mit der Bezugsziffer 100.

Der Fahrradträger mit Alarmanlage 100 umfasst einen Rahmen 110. Innerhalb des Rahmens 110 ist eine Steuereinheit untergebracht. Diese Steuereinheit ist über Kabel mit Sensoren verbunden, beispielsweise mit dem im Fahrradgehäuse 111 angeordneten Vibrations- und/oder Drucksensor, und über ein Kabel im Rahmen 110 mit Sensoren 122, 123, die in Klemmen angeordnet sind, die direkt am Rahmen 110 und am Fahrradrahmen befestigt sind. Stellt ein Sensor einen Manipulationsversuch fest, kann das Steuergerät ein akustisches/visuelles Signal auslösen und/oder ein Signal, z.B. eine Textnachricht oder eine andere Art von Nachricht an ein externes Gerät, z.B. das Telefon des Benutzers, senden.

Die Verbindung zwischen dem Rahmen und dem Fahrzeug kann auch durch Kontaktsensoren 114 oder in der Basis 113 überwacht werden.

Darüber hinaus kann das System über einen anti Jamming Schutz sowie über Sensoren in der Abdeckung des 112 verfügen, die den Zugang zum Steuergerät ermöglichen, um Manipulationen zu verhindern.

Das Steuergerät wird vorteilhafterweise von einer Batterie gespeist und diese Batterie wird während der Fahrt aufgeladen. Dies kann z. B. durch Sensoren erkannt werden, die die Geschwindigkeit und/oder den Motorbetrieb des Fahrzeugs erfassen.

Wenn die Batterieladung unter einen bestimmten Wert fällt, sendet das Steuergerät über das Datenübertragungssystem des Steuergeräts ein Alarmsignal an den Benutzer.

Das Steuergerät kann über ein Selbstdiagnosesystem verfügen, das Daten sendet, wenn es feststellt, dass einer der Sensoren defekt ist und/oder nicht mit dem Steuergerät kommuniziert.

In einer Ausführungsform ist mindestens ein Sicherheitskontaktsensor 122, 123 aktiv/scharf, während das Fahrzeug in Bewegung ist, während vorteilhafterweise die Vibrationssensoren ausgeschaltet sind, um Fehlalarme zu vermeiden.

In einer bevorzugten Ausführungsform klemmt das Spannelement das Rad im Fahrradsitz 111 ein und erzeugt eine Kraft auf das Rad. Wenn das Spannelement geschlossen ist und der Sensor im Fahrradsitz 111 einen Druck und/oder ein Rad erkennt, wird die Alarmanlage aktiviert. Vorteilhafterweise erzeugt das Spannelement 120 eine Kraft auf das Rad, so dass die Sensor- und Alarmanlage scharf geschaltet wird.

Schließlich ist klar, dass für den bisher beschriebenen Fahrradträger mit Alarmanlage Ergänzungen, Änderungen oder Varianten, die für einen Fachmann naheliegend sind, angewendet werden können, ohne den Schutzbereich der beigefügten Ansprüche zu verlassen.

### Liste der Bezugsnummern

100 Fahrradträger mit Alarmanlage
110 Rahmen
111 Fahrradsitz
112 Abdeckung
113 Befestigungssockel
114 Kontaktsensor zwischen Fahrradträger und Fahrzeug
115 Befestigungssystem
120 Befestigungselement
121 Vibrationssensor
122,123 Sicherheitskontaktsensor
200 Fahrrad

## Patentansprüche

1. Fahrradträger mit einer Alarmanlage (100) für ein Fahrzeug, umfassend einen Rahmen (110), wobei der Rahmen einen an einem Fahrzeug anbringbaren Sockel (113) und/oder eine Anlage zur Befestigung an einem Fahrzeug (115), beispielsweise für ein Autodach und/oder das Heck eines Wohnmobils oder dergleichen, aufweist und der mindestens ein Gehäuse (111) zur Aufnahme eines Fahrradrades aufweist, **dadurch gekennzeichnet, dass** der Rahmen (110) in seinem Inneren eine Steuereinheit aufnimmt, die mit mindestens einem in dem Gehäuse zur Aufnahme eines Fahrradrades angeordneten Sensor (121) und mit mindestens einem optischen/akustischen Signalsystem und/oder Datenübertragungssystem verbunden ist, und dass die Steuereinheit innerhalb des Rahmens angeordnet ist, der nur durch eine Abdeckung (112) zugänglich ist, und das Fahrradrad mittels eines Befestigungselementes (120) in dem Gehäuse zur Aufnahme eines Fahrradrades (111) befestigt ist.

2. Fahrradträger mit einer Alarmanlage (100) für ein Fahrzeug nach Anspruch 1, **dadurch gekennzeichnet, dass** auf dem Deckel eine Anti-Sabotage-Anlage angeordnet ist.

3. Fahrradträger mit einer Alarmanlage (100) für ein Fahrzeug nach Anspruch 1 oder 2, **dadurch gekennzeichnet, dass** zwischen dem Befestigungssockel (113) und/oder der Befestigungsanlage an einem Fahrzeug (115) ein Kontaktsensor zwischengeschaltet ist.

4. Fahrradhalterung mit Alarmanlage (100) für ein Fahrzeug nach einem der vorhergehenden Ansprüche, **dadurch gekennzeichnet, dass** die Steuereinheit von einer Batterie gespeist wird, die während der Fahrt des Fahrzeugs vom Fahrzeug geladen wird.

5. Fahrradträger mit Alarmanlage (100) für ein Fahrzeug, nach einem der vorhergehenden Ansprüche, **dadurch gekennzeichnet, dass** die Steuereinheit mit mindestens einem Sicherheitskontaktsensor (122, 123) verbunden ist.

6. Fahrradträger mit Alarmanlage (100) für ein Fahrzeug nach einem der vorhergehenden Ansprüche, **dadurch gekennzeichnet, dass** die Steuereinheit ein Selbstdiagnosesystem aufweist, das Daten sendet, wenn es erkennt, dass einer der Sensoren defekt ist und/oder nicht mit der Steuereinheit kommuniziert.

7. Fahrradträger mit einem Alarmsystem (100) für ein Fahrzeug nach einem der vorhergehenden Ansprüche, **dadurch gekennzeichnet, dass** der mindestens eine Sicherheitskontaktsensor (122, 123) aktiv/scharf ist, während das Fahrzeug in Bewegung ist.

8. Fahrradträger mit einer Alarmanlage (100) für ein Fahrzeug nach einem der vorhergehenden Ansprüche, **dadurch gekennzeichnet, dass** das Befestigungselement (120) in geschlossenem Zustand eine Druckkraft auf das Rad in den Aufnahmen (111) erzeugt.
